# EUROPEAN PATENT SPECIFICATION

(11) **EP 3 228 425 B1**
(45) Date of publication and mention of the grant of the patent: **07.04.2021**
(21) Application number: 16164399.4
(22) Date of filing: 08.04.2016
(51) Int. Cl.: B25J 9/00, B25J 9/10

(54) **DEVICE FOR THE MOVEMENT AND POSITIONING OF AN ELEMENT IN SPACE**
VORRICHTUNG ZUM BEWEGEN UND POSITIONIEREN EINES ELEMENTS IM RAUM
DISPOSITIF POUR LE DÉPLACEMENT ET LE POSITIONNEMENT D'UN ÉLÉMENT DANS L'ESPACE

(43) Date of publication of application: 11.10.2017
(73) Proprietor: d'Egidio, Michele, Branchburg, NJ 08876 (US)
(72) Inventor: d'Egidio, Michele, Branchburg, NJ 08876 (US)
(74) Representative: ABG Intellectual Property Law, S.L.

(56) References cited:
- EP-A1- 2 918 377
- DE-A1-102010 047 356
- US-A1- 2004 126 198

## Description

### FIELD OF THE INVENTION

This invention relates to robotic technologies, and more particularly to a robot for use in industrial processes including pick-and-place operations having the advangages of mechanical amplification, stability, load-bearability, and improved dynamic characteristics.

### BACKGROUND OF THE INVENTION

The use of industrial robots for the flexible automation of industrial processes has become increasingly common for replacing time consuming, monotonous and difficult work. Such work can, for example, be transferring confectionary products such as chocolate or similar fragile or small objects from a conveyor belt to places in predetermined locations in, for example, boxes, with high speed and precision where the object is moving on a separate conveyor belt. The ability to be able to handle small and delicate objects effectively with great speed and precision is much sought after in the automation of industrial processes.

Delta type robots (also known as parallel robots) have applications in diverse industries, for example in the food industry and the pharmaceutical industry. The delta robot was first developed in 1985 by R. Clavel and is described in U.S. Pat. No. 4,976,582 (Clavel). Delta robots have proven their worth in particular for packaging lightweight foods, since they permit extremely high speed and high accuracy for performing pick-and-place applications, such as may be effectively used in the packaging machine industry, for picking products from a conveyor belt and placing them in cartons. Delta robots are typically parallel robots with three degrees of freedom (3DoF), and with simpler, more compact structure and favorable dynamic characteristics.

The delta robot is a parallel robot, *i.e.* it consists of multiple kinematic chains, *e.g.,* middle-jointed arms connecting a base with the end-effector. The key concept of the delta robot is the use of parallelograms which restrict the movement of the platform on which the end-effector is mounted to pure translation, *i.e.* only movement in the X, Y or Z direction with no rotation. The robot's base is mounted above the workspace. A plurality of actuators, e.g., three motors, are mounted equidistantly to the base. From the base, three middle-jointed arms extend. The ends of these arms are connected to a small platform. Actuation of the middle-jointed arms will move the platform along the X, Y or Z direction. Actuation can be done with linear or rotational actuators, with or without reductions (direct drive). Since the actuators are all located in the base, the middle-jointed arms can be made of a light composite material. As a result of this, the moving parts of the delta robot have a small inertia. This allows for very high speed and high accelerations. Having all the arms connected together to the end-effector increases the robot stiffness, but reduces its working volume. Each middle-jointed arm is comprised of an upper arm and a pivotally attached lower arm. Each lower arm is formed of two parallel rods that form a parallelogram. Because the lower arm consists of two parallel rods, the end effector always moves, parallel to the base plate located thereabove. This is also known as parallelogram-based control, or parallel kinematics. Note that at least three sets of the arms are necessary to provide generally translation-only motion of the end effector through three dimensions.

In use, a delta robot may be suspended over a conveyor type system to grasp and move small objects rapidly and with a high rate of precision. The end effector is arranged to support a tool or other device for carrying out a particular function or task. By a swivelling of the actuators, the end effector can be maneuvered in three-dimensional space formed by the X, Y, and Z axes to any desired position of the available work space. In addition, the end effector of the delta robot is usually equipped with visual guidance capability so that objects moving along a conveyor may be identified for picking and placing into cartons, cases, *etc.*

A fast movement over a relatively great distance, namely the width of the conveyor belt, requires a fast movement of several arms. This is possible in practice only if the robot arms have a low mass inertia, which in the case of delta robots is achieved through the use of light-weight materials, so that the mass inertia of the delta robot is minimized. However, the use of light-weight materials in the construction of the delta robot considerably restricts the load to which the delta robot can be subjected, which means that the delta robot can be used only for gripping light objects with a light gripper. For this reason, its useability and practical application is limited. Use of more robust parts and components would provide capability for gripping heavier objects, however such a benefit comes at the cost of a reduction in speed due to higher mass inertia. Also, light-weight materials used in the construction of delta robots tend to be less robust and cannot provide continuous production cycle times, e.g., 24-hour cycle times. Also, many light-weight materials cannot provide the benefits of low maintenance and infrequent repair as more robust parts and components that are utilized in other types of industrial machinery.

Generally, in the foodstuffs industry or in pharmaceutical applications, it is important that components of the delta robots be capable of being cleaned easily. For example, delta robots may include many parts, e.g., arms, located in proximity to the foodstuffs such as raw chicken parts being conveyed. During operation, these parts cannot be shielded from the chicken parts, making wash-down and clean-up of a delta robot a time consuming and expensive task. It would be an improvement within the art to provide an industrial robot where parts and components can be shielded from the foods or other materials that are being picked and placed to reduce or eliminate such wash-down and clean-up requirements.

Also, in many industrial processes, such as in pick-and-place operations, it is important for robots to exhibit superior range of motion in all directions. Because of its overall design, the end effector of a traditional delta robot has a limited range of motion, in that the end effector does not benefit from any mechanical amplification of movement. Further, superior range of motion in the Z-axis direction is critical for picking products from a conveyor belt and placing them into deep cartons or cases for shipping. As a result of the design of the pivotable arms of the delta robot which extend laterally as they move through their range of motion, often the laterally-extending arms will interfere with placement of products into cartons or cases to such depths. Also, with the delta robot, to obtain incremental increases in range of motion in the Z-axis direction, it is necessary to increase the length of the arms considerably, which adds weight and reduces production cycle time.

Document DE 10 2010 047356 A1 describes an industrial robot comprising a stationary base plate having a central opening, a parallel kinematics structure arranged between said stationary base and an upper end of an elongate boom to provide movement of said elongate boom in three dimensions, said elongate boom having a length extending through said central opening to a lower end portion, an end effector being mounted to said lower end portion and arranged for carrying a tool and moving to different positions within a three-dimensional range of motion.

For the foregoing reasons, there is room for improvement within the art.

### SUMMARY OF THE INVENTION

An industrial robot includes a parallel kinematics mechanism that provides three degrees of freedom to a ring structure while maintaining the ring structure substantially in a fixed orientation relative to a reference plane established by a stationary base plate. A pivot sleeve is suspended within the stationary base plate and may pivot on two perpendicular axes of an intermediate gimbal. An elongate boom is mounted within the pivot sleeve and extends from an upper end through the pivot sleeve to a lower end. An end effector is mounted at the lower end of the elongate boom and is arranged for carrying a work element. Gimbal rings are located at the upper and lower ends of the elongate boom and are interconnected by a control linkage to maintain the end effector substantially parallel to the ring structure during movement of the end effector through a three-dimensional work envelope.

### DESCRIPTION OF THE DRAWINGS

Fig. 1 is a perspective view of an embodiment of the industrial robot of the present invention positioned over a conveyor illustrated in phantom;
Fig. 2 is a perspective view of the industrial robot of the present invention illustrating the boom in a lowered position;
Fig. 3 is a perspective view of the industrial robot of the present invention illustrating the boom in an articulated position;
Fig. 4 is an enlarged perspective view of a top portion of the preferred embodiment of the industrial robot of the present invention;
Fig. 5 is an enlarged sectional view taken along line 5-5 of Fig. 4;
Fig. 6 is an enlarged sectional view taken along line 6-6 of Fig. 1;
Fig. 7 is a perspective view of the preferred embodiment of the industrial robot of the present invention in another articulated position;
Fig. 8 is a schematic view illustrating the internal linkages that hold the end effector in a fixed orientation;
Fig. 9 is an enlarged sectional view taken along line 9-9 of Fig. 1;
Fig. 10 is an enlarged perspective view of the end effector portion of the preferred embodiment of the industrial robot of the present invention; and,
Fig. 11 is an enlarged perspective view of the end effector portion of the preferred embodiment of the industrial robot of the present invention when the robot is in an articulated position.

### DETAILED DESCRIPTION OF THE PREFERRED EMBODIMENT

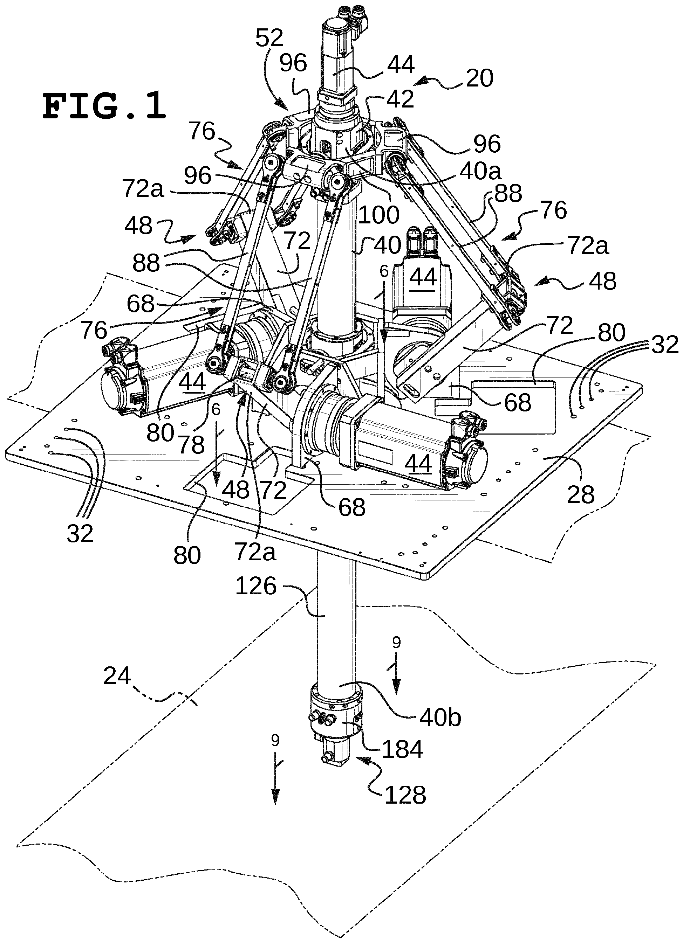

Referring now in greater detail to the drawings in which like numerals represent like components throughout the several views, there is shown in Figs. 1 through 7 an embodiment of the industrial robot of the present invention which is broadly designated by the numeral 20. In this application, the robot 20 is shown positioned in proximity to a conveyor belt 24 and in this application pick objects (oriented or disoriented) from the belt 24 and places them onto trays or into cartons (not shown) for shipping. It should be understood that use of the industrial robot 20 in this highspeed pick-and-place application is merely exemplary and the robot 20 of the present invention could be utilized for other highs-speed applications such as assembly, and pharmaceutical and medical applications. As best shown in Figs. 1-7, the industrial robot 20 includes a stationary base plate 28 that includes a plurality of through holes 32 for mounting, e.g., bolting, the base plate 28 to a suitable surface (not shown) within a production facility.

As best shown in Figs. 1, 5 and 6, the base plate 28 is generally rectangular in shape and includes a central opening 36 through which a boom 40 extends. A parallel kinematics structure is mounted to the base plate 28 to surround the central opening 36. The parallel kinematics structure includes actuators 44 mounted to the base plate 28 and control arms 48 extending upwardly from the actuators 44. The control arms 48 include parallelogram shaped links 76 to restrict movement of an upper outer ring 52 to pure translation, *i.e.* only movement in the X, Y or Z direction with no rotation. The parallel kinematics structure may be similar in construction to a delta robot. However, the invention contemplates parallel kinematics structures of other constructions.

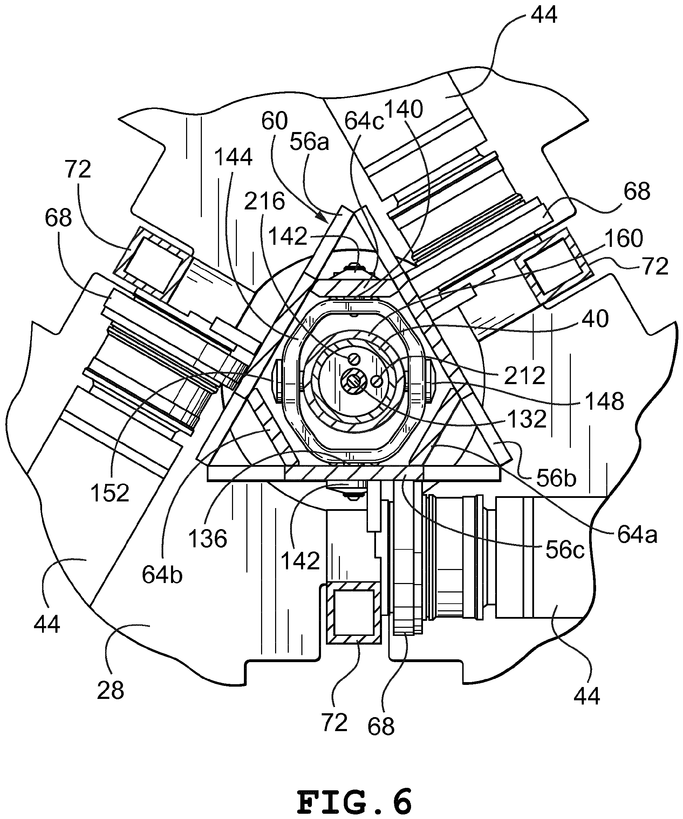

As best shown in Fig. 6, the base plate 28 includes a plurality of upstanding flanges 56a, 56b, and 56c bolted or welded thereto which together form a triangle-shaped structure 60 having welded reinforcement segments 64a, 64b, and 64c situated over the central opening 36. Extending radially from the triangular structure 60 is a plurality of mounting flanges 68 which are attached to the base plate 28 by any suitable means, e.g., welding. The plurality of actuators 44 are mounted to the mounting flanges 68, the mounting flanges 68 utilizing any suitable hardware, e.g., bolts. Each actuator 44 serves as a drive source for a control arm 48 linked thereto. As best shown in Fig. 1, each control arm 48 includes a drive link 72 pivotably linked to a parallelogram link 76. In particular, each actuator 44 includes a crank that is rotated for changing the position of the drive link 72 connected to the crank. By this rotation, the tip end 72a of the drive link 72 moves upward and can move downward through one of a plurality of T-shaped clearance openings 80 located in the base plate 28. In the description below, the "drive link 72 rotates upward" indicates that the drive link 72 rotates so that the tip end 72a moves upward, and the "drive link 72 rotates downward" indicates that the drive link 72 rotates so that the tip end 72a moves downward.

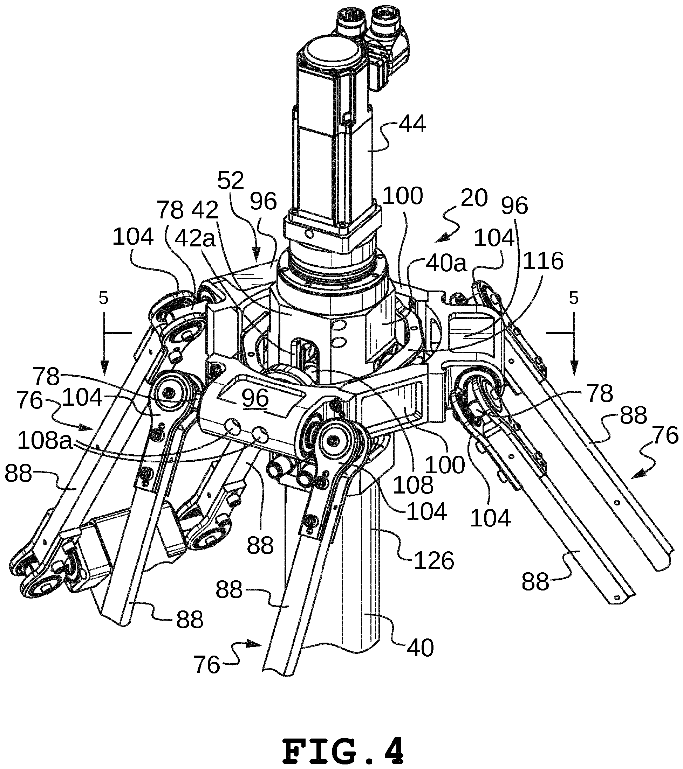

As best shown in Fig. 1, at the tip end 76 of each drive link 72, through holes are provided in which a rotatable swivel rod 78 having flattened ends is located. Each drive link 72 is pivotally connected, e.g., bolted, to a corresponding parallelogram link 76, which is a link driven by the drive link. Referring now to Figs. 1 and 4, each parallelogram link 76 includes two bar-shaped members 88 that extend substantially vertically and parallel to each other between the drive link 72 and an upper outer ring 52. As best shown in Fig. 4, the upper outer ring 52 includes a plurality of housings 96, each housing 96 provided to house a swivel rod 78 therein, the swivel rod 78 including flattened ends rotatably mounted therein. The housings 96, e.g., three housings, are connected to each other by bolting or other suitable means through connector elements 100. Together, the housings 96 and connector segments 100 form the upper outer ring 52, which is generally hexagonal in shape. Paddle-shaped connectors 104 are fastened to the upper and lower ends of each bar shaped member 88, by any suitable means, *e.g.*, bolting. With the paddle-shaped connectors fastened at opposite ends of each bar member 88, at their upper ends, the bar members 88 may be fastened, *e.g*., bolted, to the swivel rod 78 located within each housing 96. At their lower ends, the bar members 88 may be fastened, e.g., bolted, to the swivel rod 78 located at the tip end 76 of each drive link 72. Together, the substantially parallel bar members 88 and substantially parallel swivel rods 78 form the parallelogram shape of the parallelogram links 76. By connecting the upper ends of at least two of the parallelogram links 76 to the upper outer ring 52, movement of the upper outer ring 52 is restricted to purely translational movement (movement only with 3 degrees of freedom; translation in the X, Y or Z direction). In this manner, the upper outer ring 52 remains in a fixed orientation, whatever the motion of the control arms 48 may be. The plurality of control arms 48 are movable in different positions between a fully raised position and a fully lowered position relative to the base plate 28 and relative to each other to move the upper outer ring 52 to different elevational and horizontal positions within three-dimensional space while maintaining the upper outer ring 52 substantially in a fixed orientation.

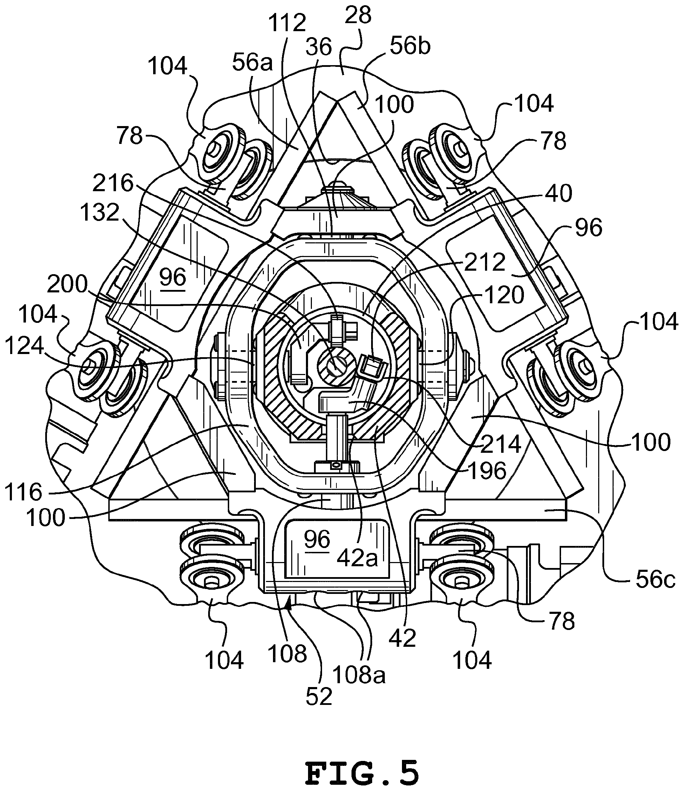

Referring now to Figs. 4, 5 and 8, the upper outer ring 52 includes two axle segments 108 and 112 located on opposite ends of the upper outer ring's periphery. The axles 108 and 112 are attached to the upper outer ring 52 by any suitable means, e.g., bolts 108a in Fig. 4. The axle segments 108 and 112 are coaxial and extend inwardly from the periphery of the upper outer ring 52 to form a first upper axis 110. As best shown in Figs. 4 and 5, the axle 108 passes through a slot 42a in the housing 42. An upper gimbal ring 116 is rotatably mounted on these axle segments 108 and 112. As shown in Fig. 5, the upper gimbal ring 116 is octagonal in shape, however, other shapes could be utilized within the scope of the invention. Likewise, the upper gimbal ring 116 includes two axle segments 120 and 124 located on opposite ends of the upper gimbal ring's outer periphery. The axle segments 120 and 124 lie along a second upper axis 122 and extend inwardly from the periphery of the upper gimbal ring 116. The axle segments of the upper gimbal ring 116 are oriented at 90 degrees with respect to the axle segments 108 and 112 of the upper outer ring 52. At its upper end, the boom 40 includes an octagonal-shaped housing 42 (best shown in Figs. 4 and 5). This housing 42 of the boom 40 is mounted on the axle segments 120 and 124 of the upper gimbal ring 116. In this manner, movement of the boom 40 remains independent of translational movement of the upper outer ring 52 in the X, Y and Z directions.

As best shown in Figs. 1 and 4, an actuator 44 is attached to the boom 40 above the housing 42. Attached at the bottom of the housing 42, the boom 40 includes a generally cylindrical portion 126 that extends downwardly and below the upper gimbal ring 116. Thereafter, the cylindrical portion 126 extends through the central opening 36 in the base plate 28 to a distal end 40b where an end effector 128 is located. As best shown in Fig. 6, a rotation shaft 132 extends centrally within the boom 40 to connect the actuator 44 attached above the housing 42 with a tool (not shown) mounted to the end effector 128. The rotation shaft 132 provides unlimited rotational capability to a tool (not shown) mounted to the end effector 128.

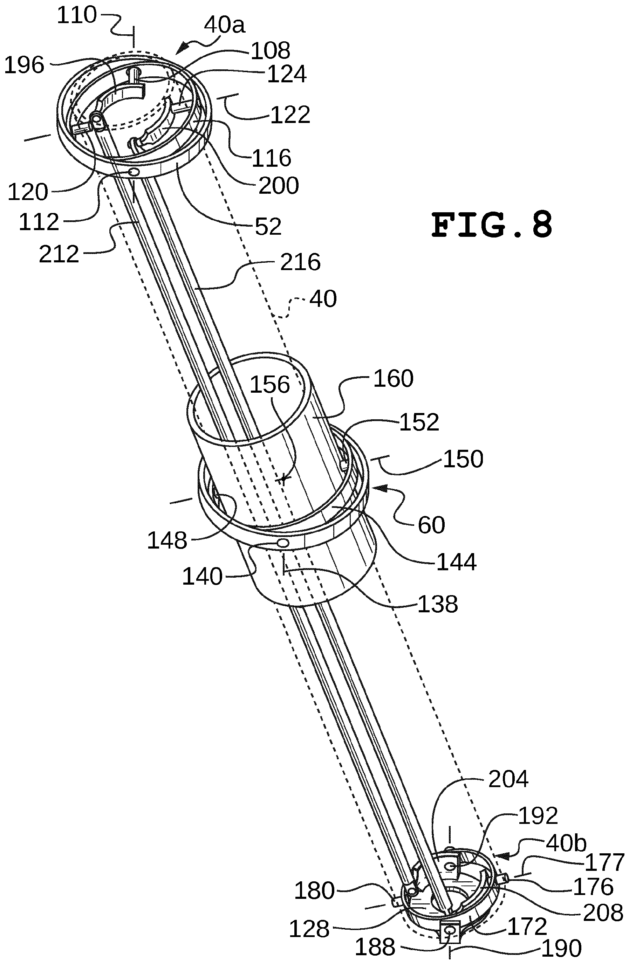

Referring now to Figs. 1, 5, 6, and 8, the central opening 36 of the base plate 28 acts as a middle pivot point for pivotal movement of the boom 40 therein. Specifically, an axle segment 136 is provided approximately midway along the length of upstanding flange 56c and an opposing axle segment 140 is provide approximately midway along the length of the bolted reinforcement section 64c. The opposing axle segments 136 and 140 may be secured to the upstanding flange 56c and to the attached reinforcement section 64c utilizing any suitable hardware, *e.g*., bolts 142. The axle segments 136 and 140 are coaxial to form a first central axis 138 (Fig. 8). The axle segments extend inwardly from their respective mounting surfaces. A center gimbal ring 144 is provided with mounting holes (not shown) to enable it to be rotatably mounted on the axle segments 136 and 140 within the central opening 36 of the base plate 28. The central opening 36 is sufficiently large to permit rotational movement of the central gimbal ring 144 therein. In this manner, the center gimbal ring 144 is free to rotate about the first central axis 138 formed by axle segments 136 and 140. Likewise, the center gimbal ring 144 is provided with axle segments 148 and 152 mounted in a similar manner thereto. The axle segments 148 and 152 are mounted to the center gimbal ring 144 using any suitable hardware and are located on opposite sides of the periphery of the center gimbal ring 144 and extend inwardly. The axle segments 148 and 152 are oriented at 90 degrees with respect to the axle segments 136 and 140 and define a second central axis 150 (Fig. 8) which is perpendicular to the first central axis 138. The intersection of the first and second central axes defines a mid-pivot point 156 (Fig. 8). A pivot sleeve 160 is mounted to the axle segments 148 and 152 of the center gimbal ring 144 and extends through the center gimbal ring 144. In this manner, the mid-pivot point 156 is located centrally within the pivot sleeve 160 enabling the pivot sleeve 160 to pivot in any direction about the mid-pivot point 156. As best shown in Fig. 6, the boom 40 extends through the pivot sleeve 160. In this manner, the boom 40 is able to pivot about the mid-pivot point 156 in all directions within the central opening 36 of the base plate 28. In addition, the boom 40 is free to slide up and down within the pivot sleeve 160 based upon movement of the control arms 48 from the fully raised to the fully lowered positions.

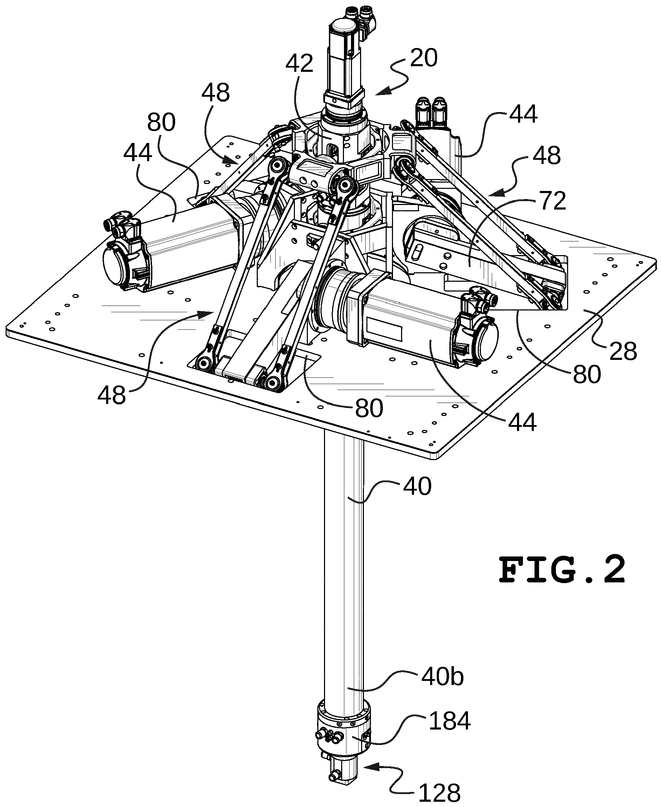

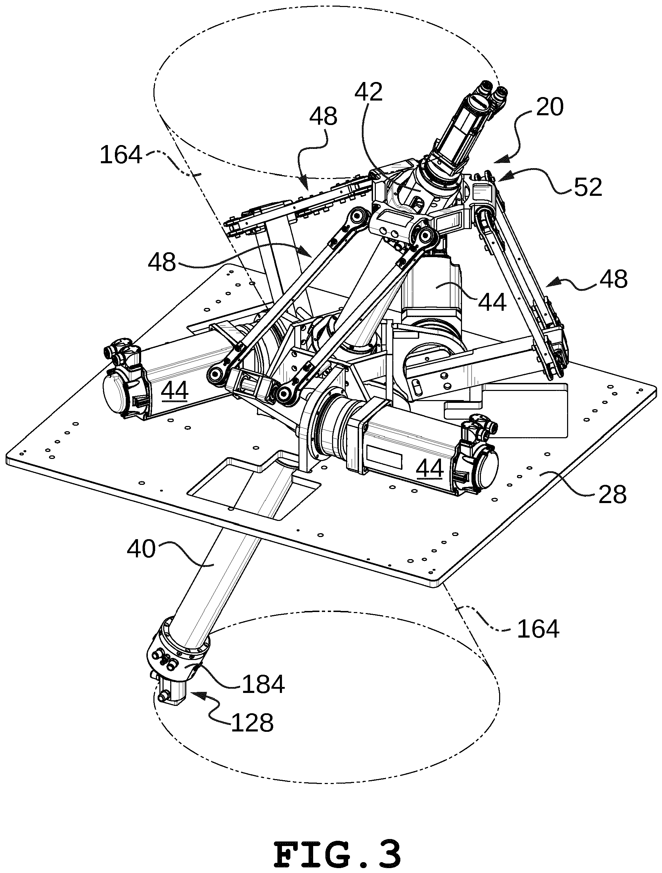

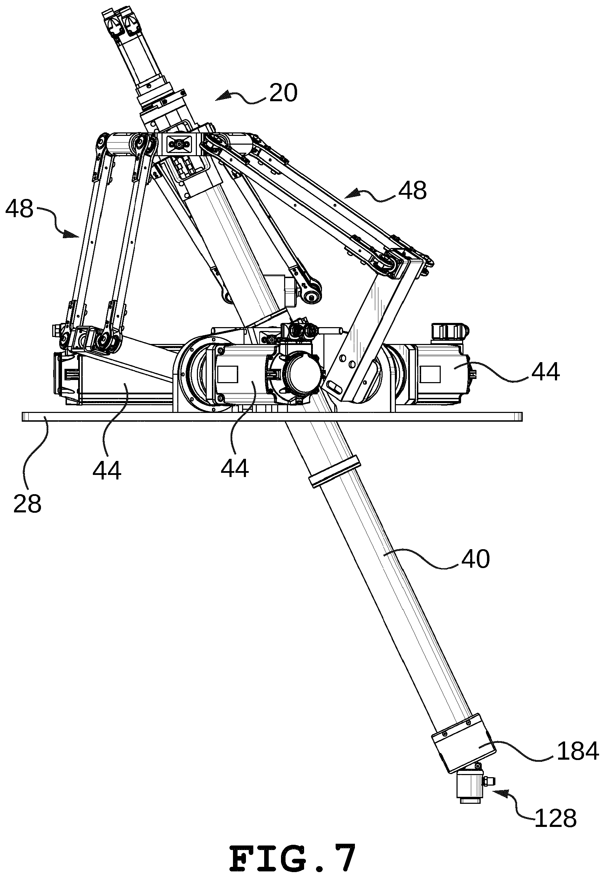

Referring now to Figs. 2, 3, and 7, the industrial robot 20 of the present invention has a range of motion covering Cartesian X, Y and Z directions such that the end effector 128 located at the distal end 40b of the boom 40 may move transversely and longitudinally within a range of motion defined by a truncated cone indicated at 164. Referring now to Fig. 2, the industrial robot 20 is illustrated therein with each of the control arms 48 in its fully lowered positions, thus causing the end effector 128 to be lowered to its lowest position in the Z direction within the range of motion 164. In particular, the T-shaped clearance openings 80 are provided on the base plate 28 to accept entry of the drive links 72 therein, thus enabling movement of the control arms to a lower position in the Z direction that otherwise would be possible in the absence of the clearance openings 80. Referring now to Figs. 3 and 7, by moving the control arms 48 to different positions with respect to each other between fully raised and fully lowered, the boom 40 can be maneuvered, e.g., pivoted, in three-dimensional space to any desired articulated position within the available range of motion 164. As illustrated in Figs. 3 and 7, because each control arm 48 consists of a parallelogram link, the upper outer ring 52 always moves substantially in a fixed orientation relative to the base plate 28 located there below. This is also known as parallelogram-based control, or parallel kinematics. The three control arms 48 provide generally translation-only motion to the upper outer ring 52 through three dimensions. It is also shown in Figs. 1, 3 and 7 that regardless of the position of the upper outer ring 52 in three-dimensional space, the end effector 128, to which a tool (not shown) is mounted, will also exhibit translation-only motion through three dimensions, and remain substantially parallel to the upper outer ring 52. Such translation-only movement of the end effector is critical to use of the industrial robot 20 in the applications discussed above, *e.g.,* pick and place, *etc.*

Referring now to Figure 8, there is shown a simplified representation of a portion of the industrial robot 20 of the present invention. The simplified representation includes like numerals to represent like components, where applicable. At this juncture, it is important to mention that the appearance of many components in Fig. 8 may be different than in other figures in that they are simplified and representational only. Fig. 8 is provided to illustrate the manner in which the end effector 128 exhibits translation-only motion through three dimensions, and remains substantially parallel to the upper outer ring 52 regardless of the pivotal movement of the boom 40.

As shown in Fig. 8, and as previously discussed in connection with other figures, the upper end of the boom 40 is rotatably mounted on opposing axle segments 120 and 124 of the upper gimbal ring 116. The upper gimbal ring 116 is rotatably mounted on opposing axle segments 108 and 112 of the upper outer ring 52 which form a first upper axis 110. The opposing axle segments 120 and 124 of the upper gimbal ring 116 are oriented at 90 degrees with respect to the opposing axle segments 108 and 112 of the upper outer ring 52 and form a second upper axis 122. In this manner, movement of the boom 40 remains independent of translational movement of the upper outer ring 52 in the X, Y, and Z directions. The cylindrical boom 40 extends downwardly and through the pivot sleeve 160. As previously discussed, the pivot sleeve 160 is rotatably mounted on opposing axle segments 148 and 152 of the center gimbal ring 144. The center gimbal ring 144 is rotatably mounted to opposing axle segments 136 (not shown in Fig. 8) and 140 which are mounted to the structure represented at 60. First and second central axes are defined at 138 and 150, respectively, in Fig. 8. Thereafter, the boom 40 extends to its distal end 40b where the end effector 128 is located.

Referring again to Fig. 8, a lower gimbal ring 172 is rotatably mounted at the distal end 40b of the boom. In particular, the lower gimbal ring 172 includes opposing axle segments 176 and 180 that extend through openings located at the distal end 40b of the boom 40. An end effector 128 is rotatably mounted to the lower gimbal ring 172. In particular, the end effector 128 includes opposing axle segments 188 and 192 which define a first lower axis 190. Axle segments 188 and 192 are arranged to pass through openings in the lower gimbal ring 172 to enable the end effector 128 to rotate about the first lower axis 190 that is substantially perpendicular to a second lower axis 177 defined by opposed axle segments 176 and 180 of the lower gimbal ring 172. The lower gimbal ring 172 includes an arcuate arm 208 extending arcuately approximately ninety degrees with an attachment point lying on the first lower axis 190. The end effector 128 also includes an arcuate arm 204 that extends arcuately approximately ninety degrees and includes an attachment point lying in the second lower axis 177.

Similarly, the upper outer ring 52 is provided with an arcuate arm 196 that extends to an attachment point lying in the second upper axis 122 and the upper gimbal ring 116 is provided with an arcuate arm 200 that extends to an attachment point lying in the first upper axis 110. A first rigid connecting rod 212 connects at its upper end to the attachment point of the arcuate arm 196 and at its lower end connects with the attachment point of arcuate arm 204. A second rigid connecting rod 216 connects at its upper end to the attachment point of the arcuate arm 200 and at its lower end connects with the arcuate arm 208. The rigid connecting rods 212 and 216 are approximately equal in length. Together, through their connection to the arcuate arms of the upper outer ring 52 and the upper gimbal ring 116, the connecting rods 212 and 216 serve to limit motion of the end effector 128 to translation-only motion through three dimensions. In this manner, the end effector 128 will remain substantially parallel to the upper outer ring 52 regardless of the pivoting motion of the boom 40 to which the end effector 128 is connected.

For example, as best shown in Fig. 8, as the lower end of the boom 40 swings along axis 177 to the right, the boom lower end 40b will pivot out of a plane parallel to the upper outer ring 52. However, because the end effector 128 is pivotally mounted to the lower gimbal ring 172, and connected to the upper outer ring 52 through the rigid connecting rod 212, the end effector 128 will remain parallel to the upper outer ring 52 through this movement.

The actual components forming the upper arcuate arms 196 and 200 can be seen in Fig. 5. The arcuate arm 196 is shown as bending at an angle that is less than 90 degrees and the arcuate arm 200 is shown as including two 45 degree bends. As best shown in Fig. 5, the top end of the rigid connecting rod 212 is housed within a stirrup 214 which is connected to upper arcuate arm 196. The top end of the rigid connecting rod 216 may include a circular eyelet (not shown) including a central opening through which the upper arcuate arm 200 may extend to connect these components.

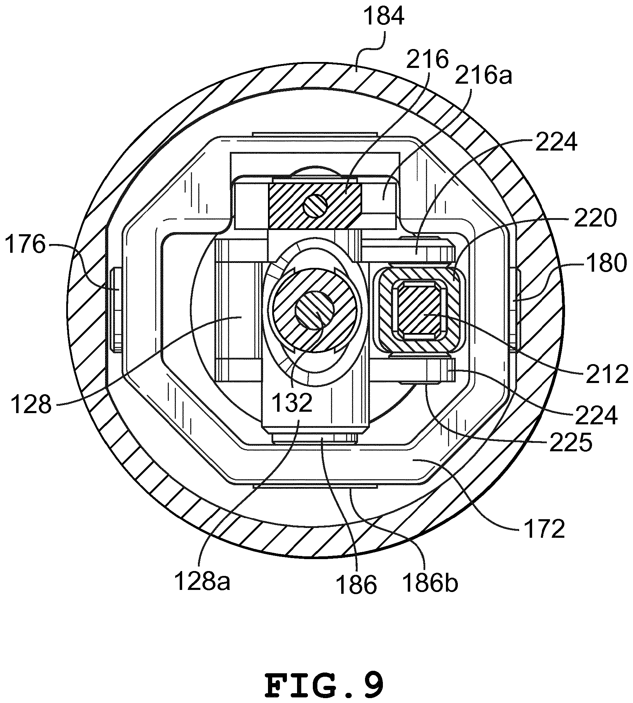

Referring now to Figs. 9-11, the actual components relating to operation of the end effector 128 are illustrated. In particular, the end effector 128 includes a housing 184 which attaches at the distal end 40b of the boom (Fig. 1). A lower gimbal ring 172 has an outer surface that is generally octagonal in shape. The lower gimbal ring 172 includes opposing axle segments 176 and 180 that extend outwardly. The lower gimbal ring 172 is shown as rotatably mounted within the housing 184 by the axle segments 176 and 180 extending through openings (not shown) in the housing 184. The opposing axle segments 176 and 180 define the second lower axis 177. The end effector 128 includes a cylindrical tube 128a in which a central axle segment 186 is disposed. The central axle segment 186 is mounted within the lower gimbal ring 172 by any suitable means, e.g., bolts 186a extending through a bolt plate 186b. The central axle segment 186 may be non-rotational with respect to the lower gimbal ring 172, however, the cylindrical tube 128a, and thus the end effector, are rotatable about the central axle segment 186. The central axle segment 186 defines the first lower axis 190 which is substantially perpendicular to the second lower axis 177.

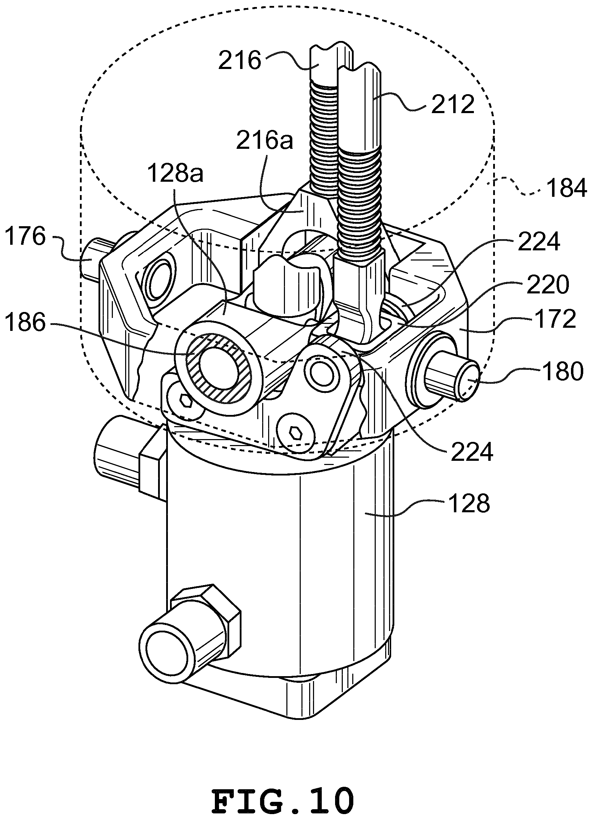

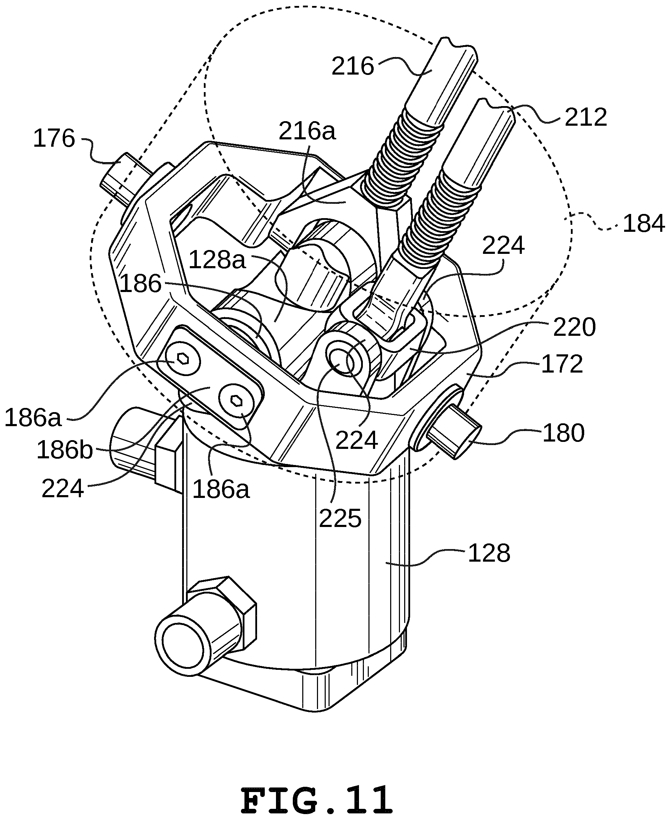

As best shown in Fig. 10, two L-shaped stand-off brackets 224 are shown attached, e.g., bolted, to the end effector 128 in two places. The L-shaped brackets extend under the central axle segment 186 and are shown attached to a square-shaped receptacle 220. The rigid connecting rod 212 is shown rotatably mounted within the receptacle 220 and retained therein by a pin 225 extending through the receptacle 220 and the L-shaped stand-off brackets 224 located on opposite sides of the receptacle 220. Likewise, the rigid connecting rod 216, which includes a trapezoidal head 216a, is shown rotatably mounted over the axle segment 186. As mentioned previously, at its upper end, the connecting rod 212 is connected to the upper outer ring 52, and at its upper end, the connecting rod 216 is connected to the upper gimbal ring 116. As best shown when comparing Fig. 10 and Fig. 11, as the boom 40 articulates, the connecting rod 212 will rotate. Through its connection to the upper outer ring 52, the connecting rod 212 will cause the end effector 128 to rotate about the axle segment 186 so as to maintain the end effector 128 substantially parallel to the upper outer ring 52.

## Claims

1. An industrial robot (20), comprising:
a. a stationary base plate (28) having a central opening (36);
b. a ring structure arranged (52) to receive an elongate boom (40);
c. a parallel kinematics structure arranged between said stationary base plate (28) and said ring structure providing movement of said ring structure in three dimensions while maintaining said ring structure substantially parallel to said stationary base plate (28);
d. an upper gimbal ring (116) mounted within said ring structure and pivotable about a first axis,
e. said elongate boom (40) comprising an upper end mounted within said ring structure and pivotable about a second axis, said second axis being substantially perpendicular to said first axis, said elongate boom(40) having a length extending through the central opening (36) of said stationary base plate (28) to a lower end portion;
f. a lower gimbal ring (172) mounted within the lower end portion of said elongate boom (40) and pivotable about a third axis;
g. a first control linkage connecting said lower gimbal (172) to said upper gimbal (116) to maintain said lower gimbal (172) substantially parallel to said upper gimbal (116) during pivotal movement of said boom (40);
h. an end effector (128) arranged for carrying a tool and moving to different positions within a three-dimensional range of motion, said end effector (128) mounted to said lower gimbal ring (172) and pivotable about a fourth axis, said fourth axis being substantially perpendicular to said third axis; and,
i. a second control linkage connecting said end effector (128) to said ring structure (52) to maintain said end effector (128) substantially parallel to said ring structure regardless of the position of said end effector (128) within said three-dimensional range of motion.

2. An industrial robot (20) according to claim 1, wherein said parallel kinematics structure comprises:
a. a plurality of actuators (44) fastened onto said stationary base plate (28) and arranged around said central opening (36); and,
b. a plurality of control arms (48) being movable in different positions relative to said stationary base plate (28) and relative to each other, each having a drive link (72) rotatably coupled to its respective actuator (44), and a driven link at one end rotatably coupled to said drive link (72) and at an opposite end rotatably coupled to said ring structure, said plurality of arms (48) arranged to move said ring structure to different elevational and horizontal positions while maintaining said ring structure substantially parallel to said stationary base plate (28).

3. An industrial robot (20) according to claim 1 or 2, wherein said parallel kinematics structure comprises a delta robot.

4. An industrial robot (20) according to claim 2 or 3, wherein said driven link comprises two spaced-apart parallel arm sections forming a parallelogram linkage.

5. An industrial robot (20) according to any of previous claims, wherein the three-dimensional range of motion is in the shape of a truncated cone.

6. An industrial robot (20) according to any of previous claims, additionally comprising a tool mounted to said end effector (128).

7. An industrial robot (20) according to claim 6, wherein said tool is selected from the group consisting of a suction tip, an air-powered gripper, an electric gripper, and a forced-air tip.

8. An industrial robot (20) according to any of claims 2 to 7, wherein each of said plurality of actuators (44) is selected from the group consisting of a rotating servo motor, a linear motor, a stepping motor, an electric motor, a hydraulic cylinder, and a pneumatic cylinder.

9. An industrial robot (20) according to any of previous claims, additionally comprising a center gimbal ring (144), mounted within the central opening (36) of said stationary base plate (28) and pivotable about a fifth axis.

10. An industrial robot (20) according to claim 9, additionally comprising a sleeve (160) mounted within said center gimbal ring (144) and pivotable about a sixth axis, said sixth axis being substantially perpendicular to said fifth axis, said sleeve (160) arranged to permit slidable movement of said elongate boom (40) therein.

11. An industrial robot (20) according to any of previous claims, wherein said upper gimbal ring (116) additionally comprises a first arcuate arm (200) extending from a point along said second axis to a free end located at a point along said first axis, and wherein said lower gimbal ring (172) additionally comprises a second arcuate arm (208) extending from a point along said third axis to a free end located at a point along said fourth axis, said first control linkage being connected to the free ends of said first and second arcuate arms (200, 208).

12. An industrial robot (20) according to claim 11, wherein said upper ring structure additionally comprises a third arcuate arm (196) extending from a point along said first axis to a free end located at a point along said second axis, and wherein said end effector (128) additionally comprises a fourth arcuate arm (204) extending arcuately from a point along said fourth axis to a free end located at a point along said third axis, said second control linkage being connected to the free ends of said third and fourth arcuate arms (196, 204).

13. An industrial robot (20) according to any of previous claims, wherein said elongate boom (40) is mounted within said upper gimbal ring (116).

14. An industrial robot (20) according to any of previous claims, wherein said first control linkage comprises a first inflexible rod (212) having a length and wherein said second control linkage comprises a second inflexible rod (216) having a length, and wherein the length of said first and second control linkages is approximately equal.

15. An industrial robot (20) according to any of previous claims, wherein said boom (40) includes a portion (126) that is substantially cylindrical.

16. An industrial robot (20) according to any of claims 2 to 15, wherein said plurality of actuators (44) comprises at least three drives.

17. An industrial robot (20) according to any of claims 2 to 16, wherein said plurality of actuators (44) are made to swivel through a predetermined arc.

18. An industrial robot (20) according to any of claims 2 to 17, wherein said stationary base plate (28) includes a cut-out corresponding to each control arm (48), each said cut-out permitting passage of a drive link (72) associated with each said control arm (48) therethrough as said control arm (48) travels to a fully lowered position.

19. An industrial robot (20) according to any of claims 6 to 18, wherein said end effector (128) provides unlimited rotational movement through 360 degrees.

20. An industrial robot (20) according to any of claims 2 to 19, wherein said driven link comprises a parallelogram link (76) including parallel bar-shaped members (88).

## Patentansprüche

1. Industrieroboter (20), umfassend:
a. eine stationäre Basisplatte (28), die eine zentrale Öffnung (36) aufweist;
b. eine Ringstruktur (52), die derart angeordnet ist, dass sie einen länglichen Ausleger (40) empfängt;
c. eine Struktur für eine parallele Kinematik, die zwischen der stationären Basisplatte (28) und der Ringstruktur angeordnet ist, die eine Bewegung der Ringstruktur in drei Dimensionen vorsieht während sie die Ringstruktur im Wesentlichen parallel zu der stationären Basisplatte (28) hält;
d. einen oberen Kardanring (116), der innerhalb der Ringstruktur und schwenkbar um eine erste Achse befestigt ist,
e. wobei der längliche Ausleger (40) ein oberes Ende umfasst, das innerhalb der Ringstruktur und schwenkbar um eine zweite Achse befestigt ist, wobei die zweite Achse im Wesentlichen senkrecht zu der ersten Achse ist, wobei der längliche Ausleger (40) eine Länge aufweist, die sich durch die zentrale Öffnung (36) der stationären Basisplatte (28) zu einem unteren Endbereich erstreckt;
f. einen unteren Kardanring (172), der innerhalb des unteren Endbereichs des länglichen Auslegers (40) und schwenkbar um eine dritte Achse befestigt ist;
g. ein erstes Steuerungsgestänge, das den unteren Kardanring (172) mit dem oberen Kardanring (116) derart verbindet, dass es den unteren Kardanring (172) im Wesentlichen parallel zu dem oberen Kardanring (116) während einer schwenkenden Bewegung des Auslegers (40) hält;
h. einen Endeffektor (128), der zum Tragen eines Werkzeugs und zum Bewegen zu verschiedenen Positionen innerhalb eines dreidimensionalen Bewegungsbereichs vorgesehen ist, wobei der Endeffektor (128) an dem unteren Kardanring (172) und schwenkbar um eine vierte Achse befestigt ist, wobei die vierte Achse im Wesentlichen senkrecht zu der dritten Achse ist; und
i. ein zweites Steuerungsgestänge, das den Endeffektor (128) mit der Ringstruktur (52) derart verbindet, dass es den Endeffektor (128) im Wesentlichen parallel zu der Ringstruktur hält, unabhängig von der Position des Endeffektors (128) innerhalb des dreidimensionalen Bewegungsbereichs.

2. Industrieroboter (20) nach Anspruch 1, wobei die Struktur für eine parallele Kinematik umfasst:
a. eine Mehrzahl von Aktuatoren (44), die auf der stationären Basisplatte (28) befestigt sind und um die zentrale Öffnung (36) herum angeordnet sind; und
b. eine Mehrzahl von Steuerungsarmen (48), die in verschiedene Positionen relativ zu der stationären Basisplatte (28) und relativ zueinander beweglich sind, wobei jeder eine Antriebsstange (72) aufweist, die rotierbar an ihren jeweiligen Aktuator (44) gekoppelt ist, und eine angetriebene Stange, die an einem Ende rotierbar an die Antriebsstange (72) gekoppelt ist und an einem gegenüberliegenden Ende rotierbar an die Ringstruktur gekoppelt ist, wobei die Mehrzahl von Armen (48) derart angeordnet ist, dass sie die Ringstruktur in verschiedene Höhen- und Horizontalpositionen bewegen, während sie die Ringstruktur im Wesentlichen parallel zu der stationären Basisplatte (28) halten.

3. Industrieroboter (20) nach Anspruch 1 oder 2, wobei die Struktur für eine parallele Kinematik einen Delta-Roboter umfasst.

4. Industrieroboter (20) nach Anspruch 2 oder 3, wobei die angetriebene Stange zwei voneinander beabstandete parallele Armabschnitte umfasst, die ein Parallelogramm-Gestänge bilden.

5. Industrieroboter (20) nach einem der vorhergehenden Ansprüche, wobei der dreidimensionale Bewegungsbereich in der Form eines Kegelstumpfes gebildet ist.

6. Industrieroboter (20) nach einem der vorhergehenden Ansprüche, ferner umfassend ein Werkzeug, das an dem Endeffektor (128) befestigt ist.

7. Industrieroboter (20) nach Anspruch 6, wobei das Werkzeug ausgewählt ist aus der Gruppe von einer Saugspitze, einem luftbetriebenen Greifer, einem elektrischen Greifer, und einer Druckluftspitze.

8. Industrieroboter (20) nach einem der Ansprüche 2 bis 7, wobei jeder der Mehrzahl von Aktuatoren (44) ausgewählt ist aus der Gruppe von einem rotierenden Servomotor, einem Linearmotor, einem Schrittmotor, einem elektrischen Motor, einem hydraulischen Zylinder, und einem pneumatischen Zylinder.

9. Industrieroboter (20) nach einem der vorhergehenden Ansprüche, ferner umfassend einen zentralen Kardanring (144), der innerhalb der zentralen Öffnung (36) der stationären Basisplatte (28) und schwenkbar um eine fünfte Achse befestigt ist.

10. Industrieroboter (20) nach Anspruch 9, ferner umfassend eine Buchse (160), die innerhalb des zentralen Kardanrings (144) und schwenkbar um eine sechste Achse befestigt ist, wobei die sechste Achse im Wesentlichen senkrecht zu der fünften Achse ist, wobei die Buchse (160) derart angeordnet ist, dass sie eine gleitende Bewegung des länglichen Auslegers (40) darin zulässt.

11. Industrieroboter (20) nach einem der vorhergehenden Ansprüche, wobei der obere Kardanring (116) ferner einen bogenförmigen Arm (200) umfasst, der sich von einem Punkt entlang der zweiten Achse zu einem freien Ende erstreckt, das an einem Punkt entlang der ersten Achse lokalisiert ist, und wobei der untere Kardanring (172) ferner einen zweiten bogenförmigen Arm (208) umfasst, der sich von einem Punkt entlang der dritten Achse zu einem freien Ende erstreckt, das an einem Punkt entlang der vierten Achse lokalisiert ist, wobei das erste Steuerungsgestänge mit den freien Enden des ersten und zweiten bogenförmigen Arms (200, 208) verbunden ist.

12. Industrieroboter (20) nach Anspruch 11, wobei die obere Ringstruktur ferner einen dritten bogenförmigen Arm (196) umfasst, der sich von einem Punkt entlang der ersten Achse zu einem freien Ende erstreckt, das an einem Punkt entlang der zweiten Achse lokalisiert ist, und wobei der Endeffektor (128) ferner einen vierten bogenförmigen Arm (204) umfasst, der sich bogenförmig von einem Punkt entlang der vierten Achse zu einem freien Ende erstreckt, das an einem Punkt entlang der dritten Achse lokalisiert ist, wobei das zweite Steuerungsgestänge mit den freien Enden des dritten und vierten bogenförmigen Arms (196, 204) verbunden ist.

13. Industrieroboter (20) nach einem der vorhergehenden Ansprüche, wobei der längliche Ausleger (40) innerhalb des oberen Kardanrings (116) befestigt ist.

14. Industrieroboter (20) nach einem der vorhergehenden Ansprüche, wobei das erste Steuerungsgestänge einen ersten unflexiblen Stab (212) umfasst, der eine Länge aufweist, und wobei das zweite Steuerungsgestänge einen zweiten unflexiblen Stab (216) umfasst, der eine Länge aufweist, und wobei die Länge des ersten und zweiten Steuerungsgestänges annähernd gleich ist.

15. Industrieroboter (20) nach einem der vorhergehenden Ansprüche, wobei der Ausleger (40) einen Bereich (126) beinhaltet, der im Wesentlichen zylindrisch ist.

16. Industrieroboter (20) nach einem der Ansprüche 2 bis 15, wobei die Mehrzahl von Aktuatoren (44) zumindest drei Antriebsmittel umfasst.

17. Industrieroboter (20) nach einem der Ansprüche 2 bis 16, wobei die Mehrzahl von Aktuatoren (44) dazu veranlasst wird, um durch einen vorbestimmten Bogen zu schwenken.

18. Industrieroboter (20) nach einem der Ansprüche 2 bis 17, wobei die stationäre Basisplatte (28) einen Ausschnitt entsprechend zu jedem Steuerungsarm (48) beinhaltet, wobei jeder Ausschnitt einen Durchgang einer Antriebsstange (72) ermöglicht, die mit jedem Steuerungsarm (48) dadurch assoziiert ist, wenn sich der Steuerungsarm (48) in eine vollständig abgesenkte Position bewegt.

19. Industrieroboter (20) nach einem der Ansprüche 6 bis 18, wobei der Endeffektor (128) eine unlimitierte rotatorische Bewegung um 360 Grad vorsieht.

20. Industrieroboter (20) nach einem der Ansprüche 2 bis 19, wobei die angetriebene Stange eine Parallelogramm-Stange (76) umfasst, die parallele stabförmige Bauteile (88) beinhaltet.

## Revendications

1. Robot industriel (20) comprenant :
a. une plaque de base fixe (28) ayant une ouverture centrale (36) ;
b. une structure annulaire (52) agencée pour recevoir une flèche allongée (40) ;
c. une structure cinématique parallèle agencée entre ladite plaque de base fixe (28) et ladite structure annulaire fournissant le mouvement de ladite structure annulaire en trois dimensions tout en maintenant ladite structure annulaire sensiblement parallèle à ladite plaque de base fixe (28) ;
d. un anneau de cardan supérieur (116) monté dans ladite structure annulaire et pouvant pivoter autour d'un premier axe,
e. ladite flèche allongée (40) comprenant une extrémité supérieure montée dans ladite structure annulaire et pouvant pivoter autour d'un deuxième axe, ledit deuxième axe étant sensiblement perpendiculaire audit premier axe, ladite flèche allongée (40) ayant une longueur s'étendant à travers l'ouverture centrale (36) de ladite plaque de base fixe (28) jusqu'à une partie d'extrémité inférieure ;
f. un anneau de cardan inférieur (172) monté dans la partie d'extrémité inférieure de ladite flèche allongée (40) et pouvant pivoter autour d'un troisième axe ;
g. une première liaison de commande raccordant ledit cardan inférieur (172) audit cardan supérieur (116) pour maintenir ledit cardan inférieur (172) sensiblement parallèle audit cardan supérieur (116) pendant le mouvement pivotant de ladite flèche (40) ;
h. un effecteur terminal (128) agencé pour porter un outil et se déplacer dans différentes positions dans une plage tridimensionnelle de mouvement, ledit effecteur terminal (128) étant monté sur ledit anneau de cardan inférieur (172) et pouvant pivoter autour d'un quatrième axe, ledit quatrième axe étant sensiblement perpendiculaire audit troisième axe ; et
i. une seconde liaison de commande raccordant ledit effecteur terminal (128) à ladite structure annulaire (52) pour maintenir ledit effecteur terminal (128) sensiblement parallèle à ladite structure annulaire indépendamment de la position dudit effecteur terminal (128) dans ladite plage tridimensionnelle de mouvement.

2. Robot industriel (20) selon la revendication 1, dans lequel ladite structure cinématique parallèle comprend :
a. une pluralité d'actionneurs (44) fixés sur ladite plaque de base fixe (28) et agencés autour de ladite ouverture centrale (36) ; et
b. une pluralité de bras de commande (48) mobiles dans différentes positions par rapport à ladite plaque de base fixe (28) et l'un par rapport à l'autre, chacun ayant une liaison d'entraînement (72) couplée en rotation à son actionneur (44) respectif, et une liaison entraînée, au niveau d'une extrémité, couplée en rotation à ladite liaison d'entraînement (72) et au niveau d'une extrémité opposée, couplée en rotation à ladite structure annulaire, ladite pluralité de bras (48) étant agencée pour déplacer ladite structure annulaire dans différentes positions en hauteur et horizontales tout en maintenant ladite structure annulaire sensiblement parallèle à ladite plaque de base fixe (28).

3. Robot industriel (20) selon la revendication 1 ou 2, dans lequel ladite structure cinématique parallèle comprend un robot delta.

4. Robot industriel (20) selon la revendication 2 ou 3, dans lequel ladite liaison entraînée comprend deux sections de bras parallèles espacées formant une liaison parallélogramme.

5. Robot industriel (20) selon l'une quelconque des revendications précédentes, dans lequel la plage tridimensionnelle de mouvement se présente sous la forme d'un cône tronqué.

6. Robot industriel (20) selon l'une quelconque des revendications précédentes, comprenant de plus un outil monté sur ledit effecteur terminal (128).

7. Robot industriel (20) selon la revendication 6, dans lequel ledit outil est sélectionné dans le groupe comprenant un embout d'aspiration, un dispositif de préhension pneumatique, un dispositif de préhension électrique, et un embout à air pulsé.

8. Robot industriel (20) selon l'une quelconque des revendications 2 à 7, dans lequel chacun de ladite pluralité d'actionneurs (44) est sélectionné dans le groupe comprenant un servomoteur rotatif, un moteur linéaire, un moteur pas à pas, un moteur électrique, un cylindre hydraulique, et un cylindre pneumatique.

9. Robot industriel (20) selon l'une quelconque des revendications précédentes, comprenant de plus un anneau de cardan central (144) monté dans l'ouverture centrale (36) de ladite plaque de base fixe (28) et pouvant pivoter autour d'un cinquième axe.

10. Robot industriel (20) selon la revendication 9, comprenant de plus un manchon (160) monté dans ledit anneau de cardan central (144) et pouvant pivoter autour d'un sixième axe, ledit sixième axe étant sensiblement perpendiculaire audit cinquième axe, ledit manchon (160) étant agencé pour permettre le mouvement coulissant de ladite flèche allongée (40) à l'intérieur de ce dernier.

11. Robot industriel (20) selon l'une quelconque des revendications précédentes, dans lequel ledit anneau de cardan supérieur (116) comprend de plus un premier bras arqué (200) s'étendant d'un point le long dudit deuxième axe jusqu'à une extrémité libre positionnée au niveau d'un point le long dudit premier axe, et dans lequel ledit anneau de cardan inférieur (172) comprend de plus un deuxième bras arqué (208) s'étendant à partir d'un point le long dudit troisième axe jusqu'à une extrémité libre positionnée au niveau d'un point le long dudit quatrième axe, ladite première liaison de commande étant raccordée aux extrémités libres desdits premier et deuxième bras arqués (200, 208).

12. Robot industriel (20) selon la revendication 11, dans lequel ladite structure annulaire supérieure comprend de plus un troisième bras arqué (196) s'étendant à partir d'un point le long dudit premier axe jusqu'à une extrémité libre positionnée au niveau d'un point le long dudit deuxième axe, et dans lequel ledit effecteur terminal (128) comprend de plus un quatrième bras arqué (204) s'étendant de manière arquée à partir d'un point le long dudit quatrième axe jusqu'à une extrémité libre positionnée au niveau d'un point le long dudit troisième axe, ladite seconde liaison de commande étant raccordée aux extrémités libres desdits troisième et quatrième bras arqués (196, 204) .

13. Robot industriel (20) selon l'une quelconque des revendications précédentes, dans lequel ladite flèche allongée (40) est montée dans ledit anneau de cardan supérieur (116).

14. Robot industriel (20) selon l'une quelconque des revendications précédentes, dans lequel ladite première liaison de commande comprend une première tige inflexible (212) ayant une longueur, et dans lequel ladite seconde liaison de commande comprend une seconde tige inflexible (216) ayant une longueur, et dans lequel la longueur desdites première et seconde liaisons de commande est approximativement égale.

15. Robot industriel (20) selon l'une quelconque des revendications précédentes, dans lequel ladite flèche (40) comprend une partie (126) qui est sensiblement cylindrique.

16. Robot industriel (20) selon l'une quelconque des revendications 2 à 15, dans lequel ladite pluralité d'actionneurs (44) comprend au moins trois entraînements.

17. Robot industriel (20) selon l'une quelconque des revendications 2 à 16, dans lequel ladite pluralité d'actionneurs (44) sont faits pour pivoter sur un arc prédéterminé.

18. Robot industriel (20) selon l'une quelconque des revendications 2 à 17, dans lequel ladite plaque de base fixe (28) comprend une découpe correspondant à chaque bras de commande (48), chacune desdites découpes permettant le passage d'une liaison d'entraînement (72) associée à chacun desdits bras de commande (48) lorsque ledit bras de commande (48) se déplace dans une position complètement abaissée.

19. Robot industriel (20) selon l'une quelconque des revendications 6 à 18, dans lequel ledit effecteur terminal (128) fournit un mouvement de rotation illimité sur 360 degrés.

20. Robot industriel (20) selon l'une quelconque des revendications 2 à 19, dans lequel ladite liaison entraînée comprend une liaison parallélogramme (76) comprenant des éléments en forme de barre parallèles (88).
